# FASCICULE DE BREVET EUROPEEN

(11) **EP 4 149 714 B1**
(45) Date de publication et mention de la délivrance du brevet: **11.03.2026**
(21) Numéro de dépôt: 21736629.3
(22) Date de dépôt: 09.06.2021
(51) Int. Cl.: B23K 26/067, B23K 26/34, B23K 26/342, B23K 26/60, B33Y 10/00, B33Y 30/00, F01D 5/12, B23K 101/00

(54) **CHAUFFAGE LASER POUR LA FABRICATION OU LA REPARATION D'AUBE DE TURBINE**
LASERBEHEIZUNG ZUR HERSTELLUNG ODER REPARATUR EINER TURBINENSCHAUFEL
LASER HEATING FOR THE MANUFACTURE OR REPAIR OF A TURBINE BLADE

(30) Priorité: 18.06.2020 FR 2006357
(43) Date de publication de la demande: 22.03.2023
(73) Titulaire: SAFRAN, 75015 Paris (FR)
(72) Inventeur: COURAPIED, Damien, Jonathan, Julien, 77550 Moissy-Cramayel (FR); MARION, Guillaume, Valentin, Giamondo, 77550 Moissy - Cramayel (FR)
(74) Mandataire: Santarelli
(86) Numéro de dépôt international: PCT/FR2021/051032
(87) Numéro de publication internationale: WO 2021/255365

(56) Documents cités:
- EP-A1- 1 702 498
- US-A1- 2019 126 413

## Description

### DOMAINE TECHNIQUE ET ÉTAT DE LA TECHNIQUE ANTÉRIEURE

La présente demande concerne le domaine de la fabrication ou la réparation de pièces mécaniques pour lesquelles au moins une étape de chauffage selon une distribution thermique précise doit être réalisée (voir par exemple EP1702498A1, qui forme la base du préambule de la revendication 1). Elle s'applique notamment à la réalisation d'une pièce, en particulier métallique et/ou en matériau composite, de forme complexe et susceptible de subir des contraintes thermiques et mécaniques importantes telle qu'une aube de turbine, par exemple pour moteur d'aéronef.

Durant le procédé de fabrication d'une aube, il est courant de soumettre un élément d'aube à un traitement thermique qui modifie les caractéristiques de son matériau. Un traitement thermique appelé « préchauffage » peut être mis en œuvre par exemple avant une opération de soudage ou avant une opération d'apport de matière, afin de limiter les contraintes dans le matériau et éviter l'apparition de fissures. Pour effectuer ce type d'étapes, il est connu en particulier d'utiliser un dispositif de chauffage par induction.

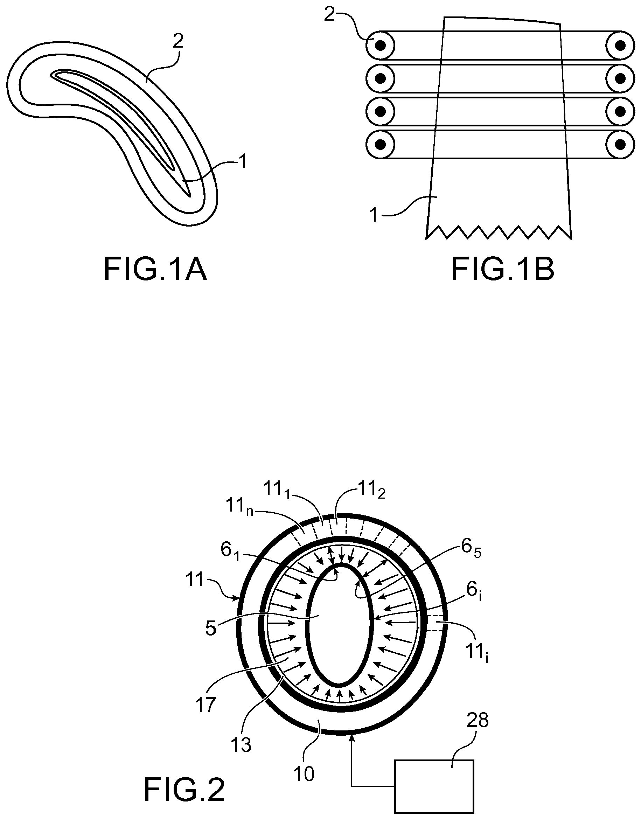

Un exemple de dispositif de chauffage par induction est illustré sur les figures 1A-1B (donnant respectivement une vue en coupe transversale et une vue en coupe longitudinale) et permet de chauffer sans contact un corps 1 baignant dans un champ électromagnétique produit par un bobinage 2.

Dans l'exemple illustré, le bobinage 2 a une forme adaptée à celle du corps 1 et reproduit sa géométrie. Cela permet de répartir de manière uniforme la chaleur.

Un tel dispositif a pour inconvénient de difficilement s'adapter au chauffage d'éléments de géométrie différente. Par ailleurs, dans certains cas, une répartition de chaleur non uniforme mais maitrisée sur différentes zones de la pièce peut être souhaitée.

Il se pose le problème de mettre en œuvre un nouveau dispositif de chauffage qui soit améliorée vis-à-vis d'inconvénient(s) mentionné(s) ci-dessus.

### EXPOSÉ DE L'INVENTION

L'invention prévoit un dispositif de chauffage par laser pour chauffer une pièce ou un élément de pièce selon un profil thermique prédéterminé, ledit dispositif de chauffage comprenant : une source laser donnée munie de plusieurs émetteurs laser respectivement pour émettre au moins un premier rayonnement laser selon une première puissance prédéterminée en direction d'une première zone cible de la pièce ou dudit élément de pièce et pour émettre un deuxième rayonnement laser selon une deuxième puissance prédéterminée en direction d'une deuxième zone cible de la pièce ou dudit élément de pièce distincte de la première zone cible, la deuxième puissance prédéterminée étant différente de la première puissance prédéterminée.

Un tel dispositif peut permettre d'obtenir un gradient de température de chauffage contrôlé précisément ou de réaliser un chauffage sensiblement uniforme d'une pièce ou d'un élément de pièce sans nécessairement reproduire la géométrie de cette pièce.

Un tel dispositif peut être utilisé pour effectuer un « préchauffage » autrement dit un traitement thermique préalable à une étape d'ajout de matière donnée lors d'une fabrication additive, en particulier par technique de fusion sur lit de poudre ou par LMD (Pour « Laser Metal Deposition » ou dépôt de métal assisté par laser).

Un tel dispositif de chauffage peut également être utilisé pour réaliser un traitement thermique faisant suite à une étape d'ajout de matière donnée, lors d'une fabrication additive, en particulier par technique de fusion sur lit de poudre ou par LMD.

Dans les deux cas, le chauffage est réalisé à une température inférieure à la température de fusion de ladite matière donnée ou de ladite poudre.

La pièce considérée peut être notamment une pièce métallique et/ou de matériau composite, en particulier une pièce destinée à subir des contraintes thermiques et mécaniques importantes.

Le dispositif de chauffage par laser s'adapte tout particulièrement à la réalisation ou à la réparation d'éléments d'aube de turbine pour moteur d'aéronef.

Le dispositif de chauffage est doté d'un module de commande desdits éléments émetteurs laser étant doté ou associé à au moins une mémoire permettant de stocker des données géométriques relatives à la géométrie de la pièce et/ou à des données de positionnement de différentes zones cibles de la pièce dans un repère donné et étant configuré pour :
- acquérir des données de profil thermique associant des données géométriques et/ou de position de zones cibles de ladite pièce à des valeurs respectives de température de chauffage,
- moduler en fonction desdites données de profil thermique, la puissance d'émission desdits un ou plusieurs émetteurs laser de ladite source laser.

Selon une possibilité de réalisation, le premier rayonnement laser selon ladite première puissance et ledit deuxième rayonnement laser selon la deuxième puissance peuvent être émis successivement par un même émetteur laser. Un contrôle temporel de chauffage peut être ainsi mis en œuvre.

Le premier rayonnement laser selon ladite première puissance et ledit deuxième rayonnement laser selon la deuxième puissance peuvent provenir respectivement et concomitamment d'un premier émetteur laser et d'un deuxième émetteur laser. Un contrôle spatial du chauffage peut être ainsi également mis en œuvre.

Selon une possibilité de mise en œuvre, la source laser peut être formée d'un ou plusieurs premiers émetteurs appartenant à un premier support ainsi qu'un ou plusieurs deuxièmes émetteurs appartenant à un deuxième support distinct du premier support, un espace entre ledit premier support et ledit deuxième support étant prévu pour accueillir ladite pièce.

Selon une autre possibilité de mise en œuvre, la source laser comporte des émetteurs laser répartis sur une zone d'un support réalisant un contour fermé, en particulier circulaire ou ovoïde, autour d'une cavité dans laquelle la pièce est apte à être disposée.

Avantageusement, les émetteurs laser sont des diodes laser de type VCSEL.

Un dispositif de chauffage tel que défini plus haut peut être avantageusement associé à un dispositif de fabrication additive par dépôt direct de matière de type poudre métallique ou fil métallique fusionné, avantageusement de type LMD, ou intégré à un système de fabrication additive en particulier par dépôt direct de matière de type poudre métallique ou fil métallique fusionné avantageusement de type LMD.

Un tel système est typiquement doté d'au moins un organe de distribution de matière et d'une autre source laser distincte de ladite source laser donnée.

Avantageusement, ce système est également doté de moyens de contrôle pour moduler la puissance d'émission respective desdits un ou plusieurs émetteurs laser en fonction de données de positionnement dudit organe de distribution de matière. Selon un mode de réalisation particulier, ces moyens de contrôle sont intégrés au module de commande défini plus haut.

Un dispositif de chauffage par laser tel que défini plus haut peut être utilisé pour mettre en œuvre différentes étapes de traitement thermique pour préparer la pièce à un soudage, ou à un apport de matière, ou à un renforcement, ou pour contrôler un refroidissement, en particulier après l'une ou l'autre des étapes précitées.

Selon un autre aspect, un mode de réalisation de la présente invention prévoit l'utilisation d'un dispositif de chauffage par laser tel que défini plus haut, pour la réparation ou la fabrication d'un élément d'aube ou d'une aube de moteur d'aéronef.

Selon un autre aspect, un mode de réalisation de la présente invention prévoit un procédé de fabrication ou de réparation d'au moins une portion d'aube de moteur d'aéronef comprenant une ou plusieurs étapes de fabrication additive de type par projection de poudre assistée par laser, en particulier de type LMD, au moins une desdites étapes de fabrication additive étant précédée ou suivie un chauffage à l'aide d'un dispositif de chauffage par laser tel que défini plus haut.

Avantageusement, le traitement thermique est effectué à une température inférieure à la température de fusion de ladite poudre.

### BRÈVE DESCRIPTION DES DESSINS

La présente invention sera mieux comprise sur la base de la description qui va suivre et des dessins en annexe sur lesquels :
Les figures 1A et 1B servent à illustrer un dispositif de chauffage par induction tel que mis en œuvre suivant l'art antérieur;
La figure 2 sert à illustrer un dispositif de chauffage par laser tel que mis en œuvre suivant un mode de réalisation de la présente invention ;
La figure 3 sert à illustrer un dispositif de fabrication additive de type LMD auquel un dispositif de chauffage par laser suivant l'invention peut être associé ou dans lequel ce dispositif de chauffage peut être intégré ;
Les figures 4A et 4B servent à illustrer différents exemples de profils thermiques en fonctions de coordonnées de la pièce qu'un dispositif de chauffage suivant l'invention est susceptible de mettre en œuvre ;
Les figures 5A, 5B, 5C et 5D servent à illustrer différentes formes de régions localisées susceptibles d'être chauffées par un dispositif de chauffage par laser tel que mis en œuvre suivant l'invention ;
La figure 6 sert à illustrer un exemple particulier de support d'émetteurs laser dans un dispositif de chauffage par laser tel que mis en œuvre suivant la présente invention ;
La figure 7 sert à illustrer un autre exemple particulier de support d'émetteurs laser dans un dispositif de chauffage par laser tel que mis en œuvre suivant la présente invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Un exemple de réalisation d'un dispositif de chauffage par laser tel que mis en œuvre suivant mode de réalisation de la présente invention est représenté de manière schématique sur la figure 2.

On utilise un tel dispositif notamment dans le cadre de la fabrication ou la réparation d'une pièce 5, en particulier une pièce à base de matériau métallique et/ou composite, et qui peut être destinée à subir des contraintes thermiques et mécaniques importantes et/ou peut être dotée d'une forme complexe. La pièce 5 en question peut être en particulier un élément d'aube ou une aube de turbine à gaz destinée à être soumise à des contraintes thermiques et de fluage élevées.

L'aube de turbine que l'on fabrique ou l'on répare peut être prévue en un alliage métallique tel que par exemple un alliage TiAl ou, selon un autre exemple, un alliage à base de nickel et d'un ou plusieurs des éléments suivants : Cr, Co, Mo, W, AI, Ti, Ta, Hf, Re, Ru.

Selon d'autres exemples, la pièce 5 peut être formée d'un superalliage d'acier réfractaire ou d'un composite composé d'un superalliage à base de nickel renforcé par une faible fraction volumique (plusieurs pourcents) de fibres. En variante, la pièce 5 considérée peut être dotée d'un corps formé d'un matériau donné recouvert d'un ou plusieurs revêtements de matériau différent du matériau donné par exemple d'un corps métallique revêtu d'une barrière thermique en matériau céramique.

Le dispositif de chauffage par laser peut être employé lors de différentes étapes de traitement thermique d'un procédé de fabrication de d'une aube, et en particulier de traitement thermique à une température inférieure à la température de fusion du ou des matériaux en présence. Ainsi, un tel dispositif de chauffage peut être utilisé pour réaliser un préchauffage, en particulier un traitement thermique sur une ébauche de pièce ou une pièce ou un élément de pièce, préalablement à une étape d'ajout de matière sur cette pièce ou ébauche ou élément. Le traitement thermique de pré-chauffage est dans ce cas réalisé à une température inférieure à une température de fusion d'une poudre utilisée pour réaliser ensuite l'ajout de matière typiquement par méthode LMD.

Un autre exemple d'utilisation du dispositif de chauffage pour effectuer un recuit rapide de préparation au soudage effectué généralement à une température comprise entre 700°C et 900°C, par exemple de l'ordre de 800°C.

Le dispositif de chauffage n'est pas nécessairement utilisé pour effectuer des étapes de préchauffage et peut être employé pour réaliser des étapes qui font suite à une étape d'ajout de matière. Par exemple, on peut utiliser le dispositif de chauffage lors d'un recuit dit « de détente » effectué typiquement à une température comprise entre 600°C et 1000°C. Le recuit est là encore typiquement effectué à une température inférieure à la température de fusion du ou des matériaux en présence.

Un autre exemple d'utilisation du dispositif de chauffage est un recuit mis en œuvre lors d'une opération de rechargement durant laquelle on vient reconstruire des zones d'une pièce qui présente un manque de matière ou bien pour rapporter de la matière sur cette pièce. Par exemple, on peut vouloir recharger une aube en superalliage à base de nickel monocristallin en apportant une microstructure de rechargement présentant une orientation cristalline cohérente avec celle de l'aube.

L'opération de rechargement peut être effectuée par une technique de fabrication additive par fusion de lit de poudre, par exemple de type LMD (pour « Laser Metal Deposition »). Un contrôle précis de la distribution spatiale de température que l'on souhaite imposer à la pièce 5 peut être alors obtenu à l'aide du dispositif de chauffage laser.

Pour chauffer la pièce 5 selon un profil thermique prédéterminé qui peut être adapté à la forme géométrique de cette pièce 5, le dispositif de chauffage est ici muni d'une source laser 11 de puissance réglable et dans cet exemple formé d'une pluralité d'émetteurs lasers 11₁, ...,11ₙ répartis sur un support 10.

Les émetteurs lasers 11₁, ...,11ₙ peuvent être par exemple des diodes laser, en particulier de type à cavité verticale émettant par la surface ou VCSEL (« vertical-cavity surface-emitting laser ») autrement dit des diodes laser à semi-conducteur émettant un rayon laser perpendiculaire à la surface d'une région active semi-conductrice. Cette région est associée à un résonateur laser formé typiquement de miroirs de Bragg parallèles à ladite surface. De tels types d'émetteurs ont, dans le cadre de l'application visée, notamment pour avantages d'émettre un faisceau de divergence faible, de permettre une forte densité d'intégration d'émetteurs, d'être intégrables sous forme de plusieurs rangées ou de matrices, de faciliter un contrôle spatial et temporel de la quantité d'énergie apportée à la pièce 5 ou à des zones cibles de la pièce 5 que l'on souhaite chauffer.

Le nombre d'émetteur et leur densité de répartition dépend du type de pièce à préchauffer et du système de mise en forme. Selon un exemple de réalisation particulier, on le dispositif peut être doté de 1 à 20 groupes d'émetteurs indépendants en vertical ou en en horizontal, chaque groupe pouvant être composé de 1 à plusieurs centaines d'émetteurs. Chaque émetteur peut être espacé du suivant d'une distance par exemple de l'ordre de 100 µm sur le module.

Un émetteur laser 11ᵢ donné produit un rayonnement à une longueur d'onde λa typiquement comprise entre 650 nm et 1300 nm, par exemple de l'ordre de 800 à 1000 nm La puissance Pi du laser est réglable individuellement et par exemple comprise entre 100 W et 10 kW en fonction de la température de chauffage à laquelle on souhaite soumettre une zone cible 6i de la pièce.

Dans l'exemple illustré, les émetteurs lasers 11₁, ...,11ₙ sont disposés sur un support 10 réalisant un contour fermé. Les émetteurs lasers 11₁, ...,11ₙ sont ici en particulier répartis autour d'une surface de forme cylindrique définissant une cavité 17 dans laquelle la pièce 5 est placée lors du chauffage. Le dispositif de chauffage est également doté d'un système optique 13 pour orienter les faisceaux lasers. Par exemple, le système optique comporte des lentilles réparties sur la surface cylindrique et chacune en regard d'un ou plusieurs émetteurs laser.

Un tel dispositif de chauffage peut permettre de réaliser un chauffage uniforme de la pièce 5 bien que celle-ci ait une géométrie différente de celle de l'ensemble des éléments chauffants répartis autour d'elle.

Pour cela, à l'aide d'un contrôle individuel de puissance des émetteurs laser 11₁,...,11ₙ, un premier émetteur 11₁ de rayonnement laser peut émettre un rayonnement selon une première puissance P₁ prédéterminée en direction d'une première zone cible 6₁ de la pièce 5 située à une première distance d₁ de cet émetteur 11₁ tandis qu'un autre émetteur émet un rayonnement selon une autre puissance P₅ différente de la première puissance P₁ en direction d'une autre zone cible 6₅ de la pièce 5 située à une deuxième distance d₂ de la pièce 5. Les puissances P₁, P₅ sont adaptées en fonction du positionnement des zones cibles 6₁, 6₅ par rapport à la source laser, autrement dit en fonction de la forme de l'objet exposé. Dans l'exemple illustré, la distance d₁ étant inférieure à la distance ds, la puissance P₅ peut être par exemple prévue supérieure à la puissance P₁ pour permettre de réaliser un chauffage uniforme ou sensiblement uniforme entre les zones cibles 6₁, 6₅ de la pièce 5.

Avec un tel dispositif de chauffage, on peut également effectuer un chauffage non-uniforme de la pièce 5 mais avec un gradient thermique maitrisé, en soumettant par exemple une zone localisée de la pièce 5 à température de chauffage donnée, tandis qu'une autre zone de la pièce est portée à une température différente, voire n'est pas exposée à un faisceau laser, un émetteur situé en regard de cette autre zone n'émettant pas de faisceau laser.

Pour permettre de commander individuellement la puissance des émetteurs 11₁,...,11ₙ, le dispositif de chauffage est pourvu ou associé à un module de commande 28. Ce module de commande 28 est typiquement doté d'un ordinateur et/ou d'un processeur et/ou d'au moins un circuit électronique, par exemple un ASIC (pour « Application-Specific Integrated Circuit » ou « circuit intégré propre à une application ») avec des composants matériels et/ou logiciels permettant de produire des signaux de contrôle de l'émission et de la puissance des émetteurs 11₁,...,11ₙ. Dans le cas d'émetteurs VCSEL, ces signaux agissent par exemple notamment sur les potentiels respectifs des électrodes des diodes laser.

Selon l'invention, le module de commande 28 est également doté ou associé à au moins une mémoire, permettant de stocker des données géométriques relatives à la géométrie de la pièce 5, et/ou à des données de positionnement de différentes zones cibles de la pièce 5 dans un repère donné. Un modèle en 3 dimensions de la pièce associé à des données de structure de son matériau constitutif peut également être utilisé.

Les données géométriques et/ou de positionnement de la pièce sont typiquement respectivement associées à des données de température de chauffage, et/ou d'énergie laser et/ou de puissance laser. Plus particulièrement, le module 28 de commande peut, à partir de données de profil thermique associées à des données géométriques de la pièce 5 et/ou de positionnement des zones cibles de la pièce 5, contrôler individuellement les émetteurs laser 11₁,...,11ₙ..

Outre un contrôle individuel de puissance d'émission, un contrôle de type « ON/OFF », de sorte à rendre actifs un ou plusieurs desdits émetteurs laser c'est-à-dire qu'ils émettent chacun un rayonnement laser, tandis qu'un ou plusieurs autres émetteurs sont rendus inactifs autrement dit n'émettent pas de rayonnement laser peut être mis en œuvre.

Un contrôle du chauffage réalisé par un tel dispositif peut être mis en œuvre à l'aide de capteurs de mesure de température de type pyromètre ou de thermocouples ou de caméra thermique. Un asservissement de la température de chauffage en modulant la puissance des diodes laser peut être par exemple réalisé afin de maintenir une température dans la pièce constante dans le temps.

Une application particulière d'un dispositif de chauffage à émetteurs laser tel que décrit précédemment est son association avec un dispositif de fabrication additive ou son intégration dans un système de fabrication additive, en particulier un dispositif ou un système utilisant la technique de fusion sur lit de poudre tel que par exemple un dispositif LMD (« Laser Metal Deposition ») reposant sur le principe de dépôt d'un jet de poudre sur une surface en fusion chauffée par un laser haute puissance.

De tels dispositifs peuvent être pourvus d'un organe de distribution formé en métal ce qui rend inadéquate l'utilisation d'un dispositif de chauffage par induction. En effet, l'utilisation d'un tel dispositif de chauffage pourrait créer des courants de Foucault parasites au niveau de l'organe de distribution de matière typiquement métallique et venir perturber son fonctionnement en provoquant un échauffement intempestif de cet organe.

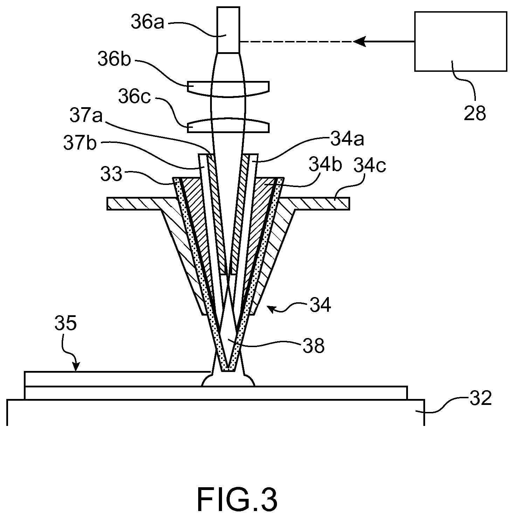

La figure 3 représente un dispositif de fabrication additive particulier utilisant la technique LMD et que l'on peut associer à un dispositif de chauffage suivant l'invention (non représenté sur cette figure). Une fusion de poudre projetée est ici mise en œuvre à l'aide d'un laser 38 pour former ou recharger un élément d'aube 35.

Les paramètres de fonctionnement du dispositif de fabrication additive, notamment de la source laser 38, en particulier sa puissance au cours du procédé, peuvent être modulés par le biais d'une unité de commande indépendante. En variante, le même module de commande 28 que celui du dispositif de chauffage laser décrit précédemment peut être utilisé.

L'unité de commande ou le module de commande 28 peut être également configuré(e) pour faire l'acquisition de données de positionnement de l'organe de distribution de matière et adapter la puissance respective des émetteurs laser en fonction de ces données de positionnement. Des données de positionnement d'un support de la pièce peuvent être également prises en compte. De telles données de positionnement peuvent être elle-même issues de capteurs de position et/ou de mouvement.

Le dispositif de fabrication additive par fusion sélective sur lit de poudre est dans cet exemple conçu pour réaliser l'élément d'aube 35 par dépôt de matière sur un support 32 de type plateau horizontal. Le dispositif est muni d'un organe de distribution de matière mobile par rapport au support 32 et porté par exemple par un bras robotisé. Le dispositif de fabrication est relié à une réserve de poudre métallique et à un distributeur de poudre métallique. L'organe de distribution de matière comprend une buse 34 de projection de la poudre métallique et au moins un émetteur laser 36 configuré pour émettre un faisceau laser 38 à travers la buse 34. La poudre est véhiculée par le gaz porteur et est projetée sous la forme d'un flux de poudre. La poudre comprend par exemple un alliage à base de nickel.

Le faisceau laser 38 peut être acheminé jusqu'à la buse 34 par un chemin optique défini dans l'exemple particulier illustré par une fibre optique 36a et des lentilles, avec par exemple une lentille de collimation 36b et une lentille de focalisation 36c. Le faisceau 38 est destiné à traverser une ouverture axiale interne de la buse 34 et à être dirigé vers le support 32 sur lequel la poudre est projetée. Le faisceau laser 38 est émis à une longueur d'onde λb prédéterminée et à une puissance prédéterminée de façon à faire fondre la poudre projetée. La longueur d'onde λb est par exemple de l'ordre de 1064 nm. Le faisceau 38 est par exemple celui d'un laser YAG d'une puissance par exemple compris entre 0.2 kW à 2 kW
Dans l'exemple représenté, la buse 34 a une forme générale conique ou tronconique, dont une extrémité de plus petit diamètre forme la sortie de poudre. Dans cet exemple, la buse 34 comprend plusieurs cônes 34a, 34b, 34c coaxiaux, ici au nombre de trois, qui sont montés les uns à l'intérieur des autres.

Un cône interne 34a définit avec un cône intermédiaire 34b qui l'entoure un passage annulaire interne d'éjection d'un flux de gaz protecteur 37a autour du faisceau 38. Le passage est relié à des moyens d'acheminement de gaz protecteur depuis la réserve précitée. Typiquement, le gaz protecteur 37a est un gaz inerte tel que par exemple de l'Argon, de l'Hélium, ou de l'Azote. Le cône intermédiaire 34b définit avec le cône externe 34c qui l'entoure un passage annulaire externe d'éjection d'un flux de poudre 33. Le cône intermédiaire 34b définit avec le cône interne 34c qui l'entoure un passage annulaire de passage d'un gaz de mise en forme 37b.

La source de chaleur génère sur son passage des gradients thermiques importants, par exemple de l'ordre de 10000-20000K/s qui sont susceptibles d'induire des contraintes mécaniques résiduelles. Lors de la solidification et du refroidissement, la matière peut subir un retrait dans les directions transversale, longitudinale et dans l'épaisseur. Ces retraits occasionnent des contraintes mécaniques qui pourraient être la source d'une fissuration transversale (liée au retrait longitudinal) ou longitudinale (liée au retrait transversal). Au passage du faisceau laser 38 conduisant à la fusion de la matière, les contraintes mécaniques locales dépendent du gradient thermique ainsi que des conditions de bridage de l'élément 35. Dans le cas d'un élément 35 non bridé, le chauffage engendre une expansion locale de la partie supérieure qui est susceptible de provoquer une courbure concave. Du fait de cette courbure, la face supérieure est soumise à une contrainte de traction.

Pour palier des mises en contraintes non désirées, on peut prévoir de soumettre l'élément 35 mis en œuvre à l'aide du dispositif de fabrication additive précité à une étape de traitement thermique appelée « post-chauffage », autrement dit réalisée à la suite de l'étape d'apport de matière. On soumet ainsi ensuite l'élément 35 à un traitement thermique avec un gradient thermique contrôlé afin de limiter les contraintes dans le matériau. Par exemple un recuit de type post-chauffage peut être réalisé à une température comprise par exemple entre 500°C et 1000°C.

Outre un traitement thermique contrôlé lors du refroidissement de l'élément 35 ou effectuée après apport de matière, un dispositif de chauffage par laser tel que mis en œuvre suivant la présente invention peut être également utilisé pour réaliser un pré-chauffage, autrement dit une étape de traitement thermique sur un corps ou un élément préalablement à l'ajout de matière. Par exemple, un recuit de type préchauffage peut être réalisé à une température comprise par exemple entre 300°C et 1000°C.

La puissance d'émission de la source laser 38 du dispositif décrit précédemment peut être adaptée en fonction de données de positionnement de la pièce 35 dans un repère donné et/ou des données relatives à sa forme géométrique.

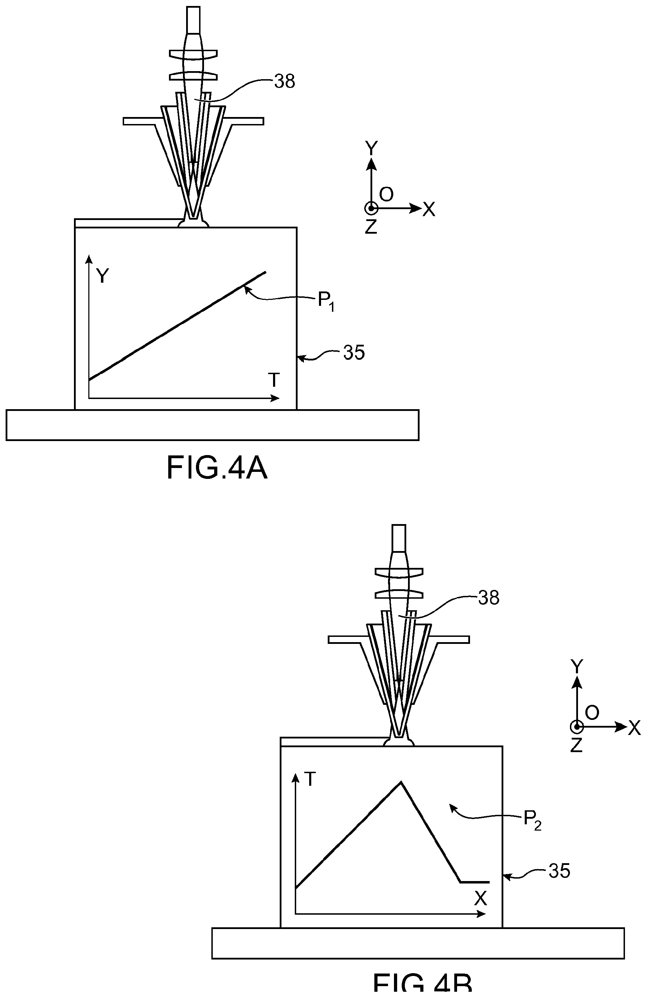

Dans l'exemple particulier illustré sur la figure 4A, la puissance de la source laser 38 du dispositif de fabrication additive est adaptée en fonction d'un profil thermique P₁ prédéterminé enregistré et utilisé par le module de commande permettant de moduler la puissance de la source laser 38. Ici, le profil P₁ considéré est une fonction linéaire qui relie des données de température et des données de positionnement, ici relatives à une hauteur ou épaisseur de la pièce 35 (dimension mesurée parallèlement à un axe Y d'un repère [O ;X ;Y ;Z] par rapport à un référentiel. Selon le profil P₁, la puissance du laser 38 est augmentée au fur et à mesure que l'épaisseur de l'élément 35 est accrue.

Un autre exemple de profil thermique P₂ est donné sur la figure 4B. Le profil thermique P₂, différent de celui P1, relie cette fois des données de température et une dimension X par exemple une dimension latérale de la pièce 35. Selon le profil P₂, la puissance du laser 38 est augmentée au fur et à mesure que l'on se rapproche d'une région centrale de la pièce et diminuée au fur et à mesure que l'on se rapproche de zones latérales.

Une telle modulation de puissance en fonction d'un profil thermique peut être également mise en œuvre par le dispositif de chauffage laser tel que décrit précédemment, en particulier lorsqu'il est associé ou doté d'un module de commande tel que décrit précédemment. D'autres profils, par exemple 2D ou 3D reliant des températures de chauffages à des coordonnées 2D ou 3D peuvent être également utilisés par le module de commande de puissance. Des profils thermiques non linéaires suivant des distributions plus complexes peuvent être également prévus.

Un dispositif de chauffage par laser permet également de chauffer des régions de formes et répartitions respectives très divers.

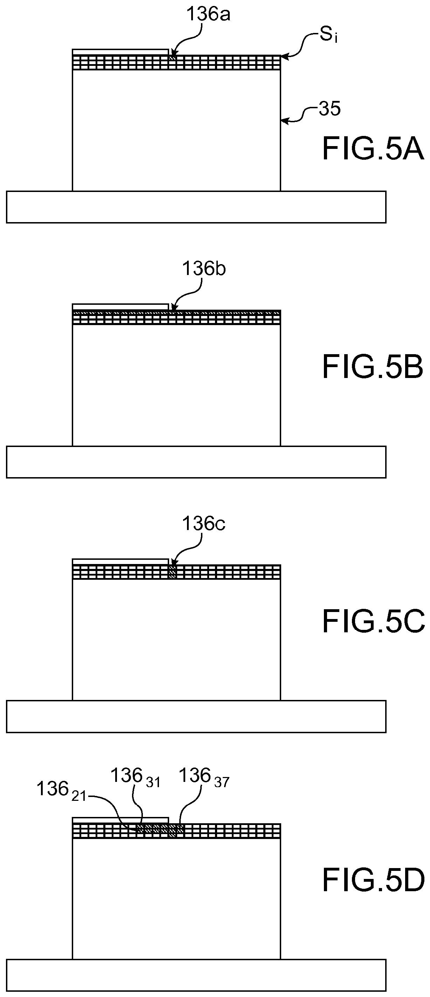

Dans l'exemple de la figure 5A, la région 136a de la pièce 35 que l'on soumet à un traitement thermique par laser correspond par exemple à une surface élémentaire Si (cellule) qu'un faisceau laser est susceptible d'illuminer lorsqu'il est statique.

Dans l'exemple illustré sur la figure 5B, on soumet une région 136b qui s'étend sur toute la largeur de la pièce 35 à un rayonnement laser de même puissance, par exemple par balayage d'une même source laser ou par le biais de différents émetteurs laser émettant simultanément à la même puissance.

Selon un autre exemple illustré sur la figure 5C, on soumet une région 136c qui s'étend sur une hauteur donnée de la pièce 35 à un rayonnement laser de même puissance.

Un autre exemple de profil de chauffage donné sur la figure 5D prévoit par exemple de soumettre des régions 136₂₁, 136₃₁ situées à des épaisseurs différentes à une même puissance laser tandis que des régions 136₃₁, 136₃₇ situées à une même épaisseur mais à des niveaux différents reçoivent des puissances respectives différentes de laser.

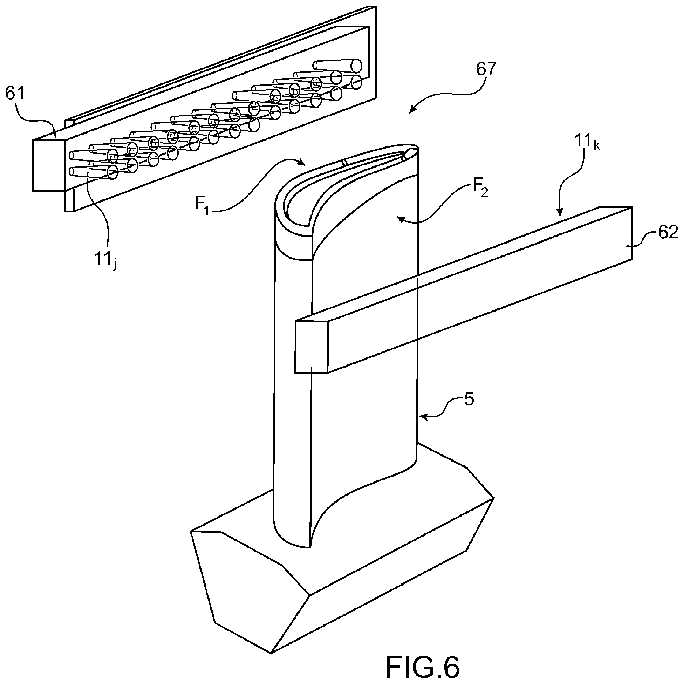

Différentes formes peuvent être prévues pour la structure de support des éléments émetteurs lasers. Dans l'exemple de réalisation particulier donné sur la figure 6, le dispositif de chauffage comporte un ou plusieurs premiers émetteurs 11ⱼ répartis sur un premier support 61, par exemple à l'allure d'un barreau parallélépipédique, tandis qu'un ou plusieurs deuxièmes émetteurs 11ₖ est ou sont intégré(s) à un deuxième support 62 à l'allure d'un barreau parallélépipédique 62. Un espace 67 ou une cavité 67 est prévue entre les deux supports 61, 62 pour accueillir la pièce 5 à chauffer.

On peut ainsi chauffer des zones cibles situées sur des faces opposées F1, F2 d'une même pièce 5 et éventuellement réaliser des profils de chauffage distincts d'une face à l'autre, en fonction des puissances respectives des émetteurs 11ⱼ et 11ₖ et/ou du nombre d'émetteurs activés et émettant d'un support à l'autre. Par exemple, les émetteurs 11ⱼ du premier support émettent à une puissance différente de celle des émetteurs 11ₖ du second support. En variante, les émetteurs 11ⱼ du premier support 61 émettent selon des puissances respectives suivant une première distribution de puissance tandis que les émetteurs 11ₖ du deuxième support 62 émettent selon des puissances respectives suivant une deuxième distribution de puissance différente de la première distribution, en particulier lorsque les deux faces F1, F2 ont des profils géométriques différents.

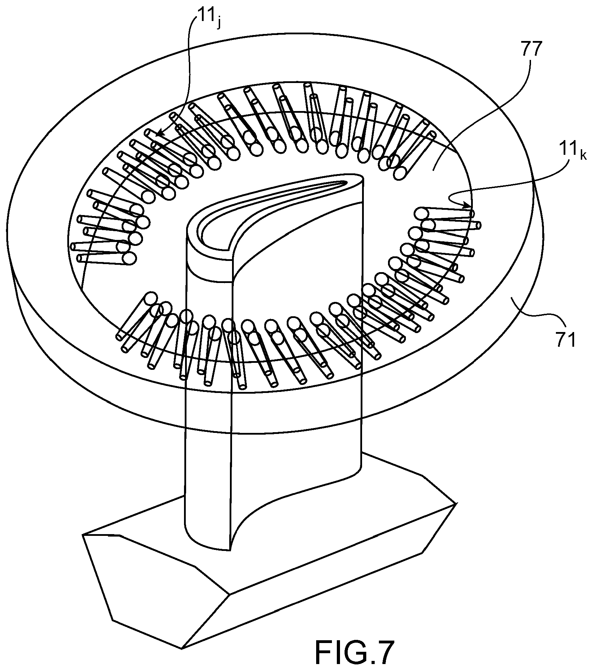

Dans l'exemple de réalisation particulier donné sur la figure 7, des émetteurs 11ⱼ, 11ₖ laser répartis sur une zone d'un support 71 réalisant un contour fermé, en particulier circulaire ou ovoïde peuvent émettre simultanément ou consécutivement, à des puissances respectives identiques ou bien différentes suivant le profil de chauffage recherché. Un tel dispositif peut permettre d'obtenir une répartition du chauffage plus uniforme.

Comme indiqué précédemment, un dispositif de chauffage tel que mis en œuvre suivant l'invention n'est pas réservé à des étapes de traitement thermique pour réaliser un soudage ou un apport de matière. Il peut être également utilisé par exemple pour réaliser un chauffage lors d'une étape de séparation d'éléments.

## Revendications

1. Dispositif de chauffage par laser pour chauffer une pièce (5, 35) mécanique ou un élément de pièce, en particulier un élément d'aube ou une aube de turbine, selon un profil thermique prédéterminé, ledit dispositif de chauffage comprenant : une source laser donnée munie de plusieurs émetteurs laser (11₁,..., 11ⱼ , 11ₖ,_{...} ,11ₙ), respectivement pour émettre au moins un premier rayonnement laser selon une première puissance prédéterminée en direction d'une première zone cible (6₁) de la pièce ou dudit élément de pièce et pour émettre un deuxième rayonnement laser selon une deuxième puissance prédéterminée en direction d'une deuxième zone cible (6₅) de la pièce ou dudit élément de pièce distincte de la première zone cible, la deuxième puissance prédéterminée étant différente de la première puissance prédéterminée, le dispositif étant **caractérisé en ce qu'**il comprend en outre : un module de commande (28) desdits éléments émetteurs laser (11₁,...,11ₙ) doté ou associé à au moins une mémoire permettant de stocker des données géométriques relatives à la géométrie de la pièce et/ou à des données de positionnement de différentes zones cibles de la pièce dans un repère donné et configuré pour
- acquérir des données de profil thermique associant des données géométriques et/ou de position de zones cibles (6₁, 6₅, 6ᵢ, 136a, 136b, 136c) de ladite pièce à des valeurs respectives de température de chauffage,
- moduler en fonction desdites données de profil thermique, la puissance d'émission desdits un ou plusieurs émetteurs laser de ladite source laser.

2. Dispositif selon la revendication 1,
ladite source laser étant configurée de sorte que ;
- un émetteur laser parmi lesdits plusieurs émetteurs laser émet successivement ledit premier rayonnement laser selon ladite première puissance et ledit deuxième rayonnement laser selon ladite deuxième puissance ou,
- parmi lesdits plusieurs émetteurs laser un premier émetteur laser (11₁) et un deuxième émetteur laser émettent concomitamment ledit premier rayonnement laser selon ladite première puissance et ledit deuxième rayonnement laser selon ladite deuxième puissance.

3. Dispositif selon l'une des revendications 1 ou 2, dans lequel ladite source laser donnée comporte un ou plusieurs premiers émetteurs (11ⱼ) appartenant à un premier support (61) ainsi qu'un ou plusieurs deuxièmes émetteurs (11ₖ) appartenant à un deuxième support (62) distinct du premier support, un espace entre ledit premier support et ledit deuxième support étant prévu pour accueillir ladite pièce (5).

4. Dispositif selon l'une des revendications 1 ou 2, dans lequel ladite source laser donnée comporte des émetteurs laser (11ⱼ, 11ₖ) répartis sur une zone d'un support (71) réalisant un contour fermé, en particulier de forme circulaire ou ovoïde, autour d'une cavité (77) dans laquelle la pièce (5) est apte à être disposée.

5. Dispositif selon l'une des revendications 1 à 4, dans lequel les émetteurs laser sont des diodes laser à semi-conducteur émettant un rayon laser perpendiculaire à la surface d'une région active semi-conductrice.

6. Système de fabrication additive par dépôt direct de matière de type poudre métallique ou fil métallique fusionné, en particulier de type Laser Metal Deposition (LMD), comprenant un dispositif de chauffage par laser selon l'une des revendications 1 à 5.

7. Système de fabrication additive selon la revendication 6, doté d'un organe de distribution de matière et d'une autre source laser distincte de ladite source laser donnée, le dispositif de chauffage étant configuré de sorte que lesdits un ou plusieurs émetteurs laser émettent à une puissance prévue de sorte à réaliser un chauffage à une température inférieure à la température de fusion de ladite matière.

8. Utilisation d'un dispositif de chauffage selon l'une des revendications 1 à 5, pour la réparation ou la fabrication d'un élément d'aube ou d'une aube de moteur d'aéronef.

9. Utilisation selon la revendication 8, dans le cadre d'un procédé comprenant une ou plusieurs étapes de fabrication additive par projection de poudre assistée par laser, notamment selon un procédé de type Laser Metal Deposition (LMD), au moins une desdites étapes étant précédée ou suivie d'un traitement thermique à l'aide dudit dispositif de chauffage.

10. Utilisation selon la revendication 9, dans laquelle ledit traitement thermique est effectué à une température inférieure à la température de fusion de ladite poudre.

## Patentansprüche

1. Laserheizvorrichtung zum Erwärmen eines mechanischen Werkstücks (5, 35) oder eines Werkstückelements, insbesondere eines Schaufelelements oder einer Turbinenschaufel, nach einem vorbestimmten Wärmeprofil, wobei die Heizvorrichtung Folgendes umfasst:
eine bestimmte Laserquelle, die mit mehreren Lasersendern (11₁,..., 11ⱼ, 11ₖ,...,11ₙ ) ausgestattet ist, um jeweils mindestens eine erste Laserstrahlung mit einer vorbestimmten ersten Leistung in Richtung eines ersten Zielbereichs (6₁) des Werkstücks oder des Werkstückelements auszusenden und eine zweite Laserstrahlung mit einer zweiten vorbestimmten Leistung in Richtung eines zweiten Zielbereichs (6₅) des Werkstücks oder des Werkstückelements, der von dem ersten Zielbereich getrennt ist, auszusenden, wobei sich die zweite vorbestimmte Leistung von der ersten vorbestimmten Leistung unterscheidet, wobei die Vorrichtung **dadurch gekennzeichnet ist, dass** sie ferner Folgendes umfasst:
ein Steuermodul (28) der Lasersenderelemente (11₁,...,11ₙ), das mit mindestens einem Speicher ausgestattet oder verbunden ist, der es ermöglicht, geometrische Daten bezüglich der Werkstückgeometrie und/oder Positionsdaten verschiedener Zielbereiche des Werkstücks in einem bestimmten Koordinationssystem zu speichern, und das zu Folgendem konfiguriert ist:
- Erfassen von Wärmeprofildaten, die Geometrie- und/oder Positionsdaten von Zielbereichen (6₁, 6₅, 6ᵢ, 136a, 136b, 136c) des Werkstücks mit jeweiligen Heiztemperaturwerten verbinden,
- Modulieren der Sendeleistung des einen oder der mehreren Lasersender der Laserquelle in Abhängigkeit von den Wärmeprofildaten.

2. Vorrichtung nach Anspruch 1,
wobei die Laserquelle so konfiguriert ist, dass;
- ein Lasersender unter den mehreren Lasersendern nacheinander die erste Laserstrahlung gemäß der ersten Leistung und die zweite Laserstrahlung gemäß der zweiten Leistung aussendet oder,
- unter den mehreren Lasersendern ein erster Lasersender (11₁) und ein zweiter Lasersender gleichzeitig die erste Laserstrahlung gemäß der ersten Leistung und die zweite Laserstrahlung gemäß der zweiten Leistung aussenden.

3. Vorrichtung nach einem der Ansprüche 1 oder 2, wobei die Laserquelle einen oder mehrere erste Sender (11ⱼ) aufweist, die zu einem ersten Träger (61) gehören, sowie einen oder mehrere zweite Sender (11ₖ₎, die zu einem zweiten Träger (62) gehören, der von dem ersten Träger getrennt ist, wobei ein Raum zwischen dem ersten Träger und dem zweiten Träger vorgesehen ist, um das Werkstück (5) aufzunehmen.

4. Vorrichtung nach einem der Ansprüche 1 oder 2, wobei die Laserquelle Lasersender (11ⱼ, 11ₖ) aufweist, die auf einem Bereich eines Trägers (71) verteilt sind, der eine geschlossene, insbesondere kreisförmige oder eiförmige Kontur um einen Hohlraum (77) herum ausbildet, in dem das Werkstück (5) angeordnet werden kann.

5. Vorrichtung nach einem der Ansprüche 1 bis 4, wobei die Lasersender Halbleiterlaserdioden sind, die einen Laserstrahl senkrecht zu der Oberfläche eines aktiven Halbleiterbereichs aussenden.

6. Additives Fertigungssystem durch direktes Aufbringen von Material vom Typ Metallpulver oder verschmolzenem Metalldraht, insbesondere vom Typ Laser Metal Deposition (LMD), umfassend eine Lasererwärmungsvorrichtung nach einem der Ansprüche 1 bis 5.

7. Additives Fertigungssystem nach Anspruch 6, das mit einem Materialverteilungsorgan und einer anderen von der betreffenden Laserquelle getrennten Laserquelle ausgestattet ist, wobei die Heizvorrichtung so konfiguriert ist, dass die einen oder mehrere Lasersender mit einer vorgesehenen Leistung emittieren, um eine Erwärmung bei einer Temperatur unter der Schmelztemperatur des Materials durchzuführen.

8. Verwendung einer Heizvorrichtung nach einem der Ansprüche 1 bis 5 zur Reparatur oder Herstellung eines Flügelelements oder eines Flügels eines Flugzeugmotors.

9. Verwendung nach Anspruch 8, im Rahmen eines Verfahrens, das einen oder mehrere Schritte der additiven Fertigung durch lasergestütztes Pulverspritzen umfasst, insbesondere nach einem Verfahren des Typs Laser Metal Deposition (LMD), wobei mindestens einem dieser Schritte eine Wärmebehandlung mithilfe der Heizvorrichtung vorausgeht oder folgt.

10. Verwendung nach Anspruch 9, wobei die Wärmebehandlung bei einer Temperatur durchgeführt wird, die niedriger ist als die Schmelztemperatur des Pulvers.

## Claims

1. Laser heating device for heating a mechanical part (5, 35) or part element, in particular a blade element or a turbine blade, according to a predetermined thermal profile, said heating device comprising:
a given laser source equipped with a plurality of laser emitters (11₁ ,..., 11ⱼ, 11ₖ ,...,11ₙ) for emitting at least respectively a first laser radiation at a first predetermined power in the direction of a first target area (6₁) of the part or said part element and for emitting a second laser radiation at a second predetermined power in the direction of a second target area (6₅) of the part or said part element separate from the first target area, the second predetermined power being different from the first predetermined power, the device being **characterized in that** it further comprises:
a control module (28) for said laser emitter elements (11₁,...,11ₙ) provided with or associated with at least one memory for storing geometric data relating to the geometry of the part and/or to positioning data of different target areas of the part in a given reference frame and configured to
- acquire thermal profile data associating geometric and/or positional data of target areas (6₁, 6₅, 6ᵢ, 136a, 136b, 136c) of said part with respective heating temperature values,
- modulate the emission power of said one or more laser emitters of said laser source, based on said thermal profile data,

2. Device according to claim 1,
said laser source being configured such that;
- one laser emitter among said plurality of laser emitters successively emits said first laser radiation at said first power and said second laser radiation at said second power or,
- among said plurality of laser emitters, a first laser emitter (11₁) and a second laser emitter simultaneously emit said first laser radiation at said first power and said second laser radiation at said second power.

3. Device according to any one of claims 1 or 2, wherein said given laser source comprises one or more first emitters (11ⱼ) belonging to a first support (61) as well as one or more second emitters (11ₖ) belonging to a second support (62) separate from the first support, a space between said first support and said second support being provided to accommodate said part (5).

4. Device according to any one of claims 1 or 2, wherein said given laser source comprises laser emitters (11ⱼ, 11ₖ) distributed over an area of a support (71) forming a closed contour, in particular with a circular or ovoid shape, around a cavity (77) in which the part (5) can be placed.

5. Device according to any one of claims 1 to 4, wherein the laser emitters are semiconductor laser diodes emitting a laser beam perpendicular to the surface of a semiconductor active region.

6. Additive manufacturing system by direct deposition of powdered metal material or molten metal wire, in particular of the Laser Metal Deposition (LMD) type, comprising a laser heating device according to any one of claims 1 to 5.

7. Additive manufacturing system according to claim 6, provided with a material distribution device and another laser source separate from said given laser source, the heating device being configured so that said one or more laser emitters emit at a predetermined power so as to achieve heating at a temperature lower than the melting temperature of said material.

8. Use of a heating device according to any one of claims 1 to 5, for repairing or manufacturing an aircraft engine blade or blade element.

9. Use according to claim 8, in the context of a process comprising one or more additive manufacturing steps by laser-assisted powder projection, in particular according to a Laser Metal Deposition (LMD) type process, at least one of said steps being preceded or followed by heat treatment using said heating device.

10. Use according to claim 9, wherein said heat treatment is performed at a temperature lower than the melting temperature of said powder.
